# FASCICULE DE BREVET EUROPEEN

(11) **EP 3 412 526 B1**
(45) Date de publication et mention de la délivrance du brevet: **18.03.2020**
(21) Numéro de dépôt: 18175615.6
(22) Date de dépôt: 01.06.2018
(51) Int. Cl.: B60S 1/38

(54) **EMBOUT D'EXTREMITÉ POUR BALAI D'ESSUYAGE DE VÉHICULE AUTOMOBILE**
ENDSTÜCK FÜR SCHEIBENWISCHERBLATT EINES KRAFTFAHRZEUGS
END CAP FOR MOTOR VEHICLE WIPER BLADE

(30) Priorité: 08.06.2017 FR 1755106
(43) Date de publication de la demande: 12.12.2018
(73) Titulaire: Valeo Systèmes d'Essuyage, 78322 Le Mesnil Saint Denis (FR)
(72) Inventeur: HOUSSAT, Stéphane, 63500 ISSOIRE (FR); GAUCHER, Vincent, 63500 ISSOIRE (FR); JOMARD, Olivier, 63500 ISSOIRE (FR); MOULEYRE, Guillaume, 63500 ISSOIRE (FR); POTON, Eric, 63500 ISSOIRE (FR)
(74) Mandataire: Valeo Systèmes d'Essuyage

(56) Documents cités:
- EP-A1- 3 081 438
- DE-A1-102012 207 213
- DE-U1-202011 003 000
- FR-A1- 2 868 748

## Description

Le domaine de la présente invention est celui des systèmes d'essuyage destinés à équiper un véhicule automobile. Elle a pour objet un embout d'extrémité destiné à être disposé à une extrémité d'un balai d'essuyage d'un tel système d'essuyage.

Un véhicule automobile est couramment équipé d'un système d'essuyage destiné à retirer, par balayage, les liquides et salissures qui peuvent perturber la vision qu'un conducteur du véhicule automobile a de son environnement. Ces systèmes d'essuyage comprennent généralement un bras d'entraînement qui effectue un mouvement de va-et-vient angulaire autour d'un axe de rotation, et un balai d'essuyage allongé équipé d'une lame d'essuyage réalisée en un matériau élastique. En frottant contre une surface vitrée, avant ou arrière, du véhicule automobile, la lame d'essuyage en balaie l'eau et un certain nombre de salissures, et les évacue en dehors du champ de vision du conducteur.

Quelle que soit la configuration du balai d'essuyage, c'est-à-dire soit un balai d'essuyage comportant des étriers articulés qui retiennent la lame d'essuyage en plusieurs zones distinctes, soit un balai d'essuyage comportant au moins un élément de structure qui maintient la lame d'essuyage sur toute sa longueur, autrement appelé « balai plat », le balai d'essuyage est rattaché à une partie terminale du bras d'entraînement par l'intermédiaire d'un dispositif de connexion qui comprend un connecteur monté solidaire du balai d'essuyage.

A chacune des extrémités longitudinales du balai d'essuyage dans sa variante « balai plat », la lame d'essuyage et l'élément de structure sont équipées d'un embout d'extrémité qui participe d'un maintien solidaire de la lame d'essuyage et de l'élément de structure entre eux.

Classiquement, ces embouts d'extrémité comprennent un espace configuré pour recevoir une portion de la lame d'essuyage, un autre espace configuré pour recevoir l'élément de structure et un organe permettant le maintien de l'embout d'extrémité en position sur l'élément de structure. Le document EP 3 081 438 A1 divulgue un embout d'extrémité selon le préambule de la revendication 1.

L'élément de structure permet de générer une courbure du balai d'essuyage, afin que celui-ci suive le galbe de la surface vitrée à essuyer et puisse ainsi l'essuyer efficacement. Toutefois, la courbure générée par cet élément de structure n'est pas suffisante, notamment au niveau d'une portion de la surface vitrée présentant un galbe plus important, tel que c'est par exemple le cas dans des zones du pare-brise avant d'un véhicule automobile qui bordent des montants de ce pare-brise. Par ailleurs, l'espace de l'embout d'extrémité dédié à la réception de l'élément de structure s'étend dans un plan rectiligne et par conséquent s'oppose à la courbure de l'élément de structure. Ces deux aspects ont pour conséquence que, sur cette portion de la surface vitrée, la lame d'essuyage n'est pas en contact avec la surface vitrée et ne peut donc pas essuyer cette portion de la surface vitrée de manière convenable.

La présente invention a pour but de résoudre ce problème, en proposant un embout d'extrémité pour balai d'essuyage permettant d'obtenir une inclinaison d'une extrémité de la lame d'essuyage afin que celle-ci soit amenée au contact de la surface vitrée pour pouvoir l'essuyer et la débarrasser des salissures et/ou de l'eau accumulées.

L'objet de la présente invention concerne ainsi un embout d'extrémité configuré pour être installé à une extrémité longitudinale d'un balai d'essuyage, l'embout d'extrémité comprenant un volume interne et une paroi périphérique qui délimite le volume interne, l'embout d'extrémité comprenant un premier logement configuré pour recevoir un talon d'une lame d'essuyage et en communication avec une fente qui traverse la paroi périphérique, la fente étant délimitée par des bords, le premier logement s'étendant longitudinalement depuis une bouche d'entrée par laquelle le talon de la lame d'essuyage peut être introduit dans le premier logement, et s'étendant de préférence jusqu'à une paroi de fond de la paroi périphérique, le premier logement étant délimité par une paroi longitudinale disposée dans le volume interne. Selon la présente invention, une première distance D1 mesurée au droit de la bouche d'entrée entre l'un des bords délimitant la fente et la paroi longitudinale est supérieure à une deuxième distance D2 distincte de la première distance D1 et mesurée parallèlement à la première distance D1, la deuxième distance D2 étant mesurée entre l'un des bords de la fente et la paroi longitudinale.

Avantageusement, la deuxième distance D2 peut être mesurée au plus près d'une paroi de fond délimitant le premier logement.

On entend par « au droit de la bouche d'entrée » le fait que la première distance D1 est mesurée au niveau de cette bouche d'entrée. En d'autres termes, cette première distance D1 est mesurée selon une droite passant par un plan dans lequel s'inscrit cette bouche d'entrée.

La première distance D1 et la deuxième distance D2 sont mesurées selon deux droites parallèles et en deux endroits différents de l'embout d'extrémité, avantageusement le long de deux droites respectivement perpendiculaires à une paroi inférieure de la paroi périphérique, cette paroi inférieure de la paroi périphérique étant traversée par la fente du premier logement.

La fente par laquelle le premier logement débouche dans la paroi périphérique traverse la paroi inférieure de la paroi périphérique. Les bords délimitant cette fente comprennent ainsi, respectivement, deux arêtes, une première arête tournée vers le volume interne de l'embout d'extrémité et une deuxième arête tournée vers un environnement extérieur de l'embout d'extrémité. Autrement dit, cette deuxième arête est tournée dans une direction opposée au volume interne de l'embout d'extrémité.

Selon l'invention, le terme « bords de la fente » fait référence à la deuxième arête de l'un des bords de la fente.

Selon un effet de l'invention, la différence entre la première distance D1 et la deuxième distance D2 permet de générer une inclinaison d'une extrémité de la lame d'essuyage reçue dans ce premier logement. Cette inclinaison permet à la lame d'essuyage de s'adapter au galbe d'une surface vitrée qu'elle est destinée à essuyer, en particulier dans les zones latérales de cette surface vitrée qui sont bordées par les montants du véhicule porteur d'un pavillon et de la surface vitrée. La différence entre la première distance D1 et la deuxième distance D2 est également choisie de manière à ne pas perturber l'essuyage de la lame dans la zone centrale de la surface vitrée, la zone centrale étant disposée entre les zones latérales de cette surface vitrée. On comprend que la courbure de l'élément de structure du balai est configurée pour accepter la déformation imposée par l'embout d'extrémité.

Grâce à l'invention, la lame d'essuyage est donc disposée au contact de cette surface vitrée, tout au long de son parcours sur cette surface vitrée, assurant ainsi un nettoyage optimal de cette dernière et permettant d'assurer le confort et la sécurité du conducteur et de ses passagers.

Selon une caractéristique d'un aspect de la présente invention, l'embout d'extrémité comprend un deuxième logement configuré pour recevoir un élément de structure du balai d'essuyage, le deuxième logement étant délimité au moins par la paroi longitudinale et avantageusement par la paroi périphérique de l'embout d'extrémité.

Selon un exemple de réalisation, une paroi de fond de la paroi périphérique délimite à la fois le premier logement et le deuxième logement. Selon cet exemple de réalisation, le premier logement est ainsi délimité par la paroi inférieure de la paroi périphérique traversée par la fente et par la paroi de fond de cette paroi périphérique.

Selon un premier exemple de réalisation de la présente invention, la paroi longitudinale forme, avec un plan dans lequel s'inscrivent les bords de la fente, un angle compris entre 3° et 6°. Avantageusement, la paroi longitudinale forme, avec le plan dans lequel s'inscrivent les bords de la fente, un angle compris entre 4° et 5°. Encore plus avantageusement, cet angle est égal, ou sensiblement égal à 4.17°, une telle valeur correspondant au galbe des zones latérales de la surface vitrée.

Comme précédemment, on entend par « bord de la fente », la deuxième arête de l'un des bords délimitant la fente, cette deuxième arête étant tournée vers l'environnement extérieur de l'embout d'extrémité.

Selon un deuxième exemple de réalisation de la présente invention, la paroi périphérique comprend une première face tournée vers le premier logement, la paroi longitudinale comprend une face tournée vers le premier logement, la première face de la paroi périphérique s'étendant dans un premier plan, la face de la paroi longitudinale s'étendant dans un deuxième plan, le premier plan et le deuxième plan étant parallèles.

Selon une caractéristique de ce deuxième exemple de réalisation, le premier plan dans lequel s'inscrit la première face de la paroi périphérique et le deuxième plan dans lequel s'inscrit la face de la paroi longitudinale sont sécants avec le plan dans lequel s'inscrivent les bords de la fente.

On comprend donc que la première face de la paroi périphérique et la face de la paroi longitudinale, toutes deux tournées vers le premier logement, sont inclinées, cette inclinaison étant générée par la différence entre les distances D1 et D2 précédemment mentionnées.

Selon une caractéristique générale de la présente invention, la première distance D1 et la deuxième distance D2 sont mesurées entre l'un des bords de la fente et la première face de la paroi longitudinale tournée vers le premier logement.

Selon un troisième exemple de réalisation de la présente invention, la paroi longitudinale porte une excroissance émergeant dans le premier logement de l'embout d'extrémité, la deuxième distance D2 étant mesurée au droit de cette excroissance.

Selon ce troisième exemple de réalisation, la deuxième distance D2 est mesurée entre l'un des bords de la fente et un point de l'excroissance portée par la paroi longitudinale, par exemple un point de cette excroissance le plus proche de la fente.

Selon une caractéristique de la présente invention, le premier logement est de préférence délimité longitudinalement par une paroi de fond de la paroi périphérique. Selon le troisième exemple de réalisation de la présente invention, l'excroissance peut prendre appui sur cette paroi de fond.

On entend par « prend appui » le fait que cette excroissance soit issue de matière avec la paroi de fond délimitant longitudinalement le premier logement. En d'autres termes, cette paroi de fond et l'excroissance forment un ensemble monobloc, c'est-à-dire un ensemble qui ne peut pas être séparé sans que la paroi de fond ou l'excroissance ne soit détériorées.

Selon un aspect de la présente invention, l'excroissance est issue de matière avec la paroi longitudinale qui la porte.

Selon le troisième exemple de réalisation de la présente invention, la première face de la paroi périphérique tournée vers le premier logement et la face de la paroi longitudinale tournée vers le premier logement peuvent s'étendre dans des plans parallèles.

Selon un aspect de la présente invention, l'embout d'extrémité peut comprendre au moins un moyen d'accrochage de l'embout d'extrémité à l'élément de structure.

Selon une caractéristique de la présente invention, la paroi périphérique délimitant l'embout d'extrémité peut comprendre une conformation agencée pour recevoir une extrémité terminale d'un déflecteur d'air. Plus précisément, une paroi supérieure de la paroi périphérique, délimitant en partie le deuxième logement, peut comprendre cette conformation agencée pour recevoir l'extrémité terminale d'un déflecteur d'air.

L'invention concerne également un balai d'essuyage comprenant au moins une lame d'essuyage, au moins un élément de structure, et au moins un embout d'extrémité selon l'un quelconque des exemples de réalisation de la présente invention.

Selon une caractéristique de la présente invention, l'élément de structure peut comprendre au moins une encoche apte à coopérer avec au moins un moyen d'accrochage de l'embout d'extrémité à l'élément de structure.

Selon une autre caractéristique de la présente invention, le balai d'essuyage peut également comprendre un déflecteur d'air. Selon cette autre caractéristique de la présente invention, l'embout d'extrémité présente la conformation agencée pour couvrir une extrémité terminale de ce déflecteur d'air.

La présente invention concerne encore un système d'essuyage comprenant un balai d'essuyage selon la présente invention, ce balai d'essuyage étant connecté à un bras d'entrainement par un dispositif de connexion.

D'autres caractéristiques, détails et avantages ressortiront plus clairement à lecture de la description détaillée donnée ci-après à titre indicatif en relation avec les différents exemples de réalisation illustrés sur les figures suivantes :
- la figure 1 représente schématiquement un système d'essuyage selon la présente invention ;
- la figure 2 est une représentation d'une extrémité d'un balai d'essuyage comprenant un embout d'extrémité selon la présente invention, cet embout d'extrémité étant coupé selon un plan longitudinal, ici vertical, afin de laisser apparaître une lame d'essuyage et un élément de structure du balai d'essuyage ;
- la figure 3 est une vue en perspective de dessous de l'embout d'extrémité selon la présente invention ;
- les figures 4 à 6 sont des vues en perspective d'une coupe selon un plan longitudinal, ici vertical, de l'embout d'extrémité selon trois exemples de réalisation de la présente invention.

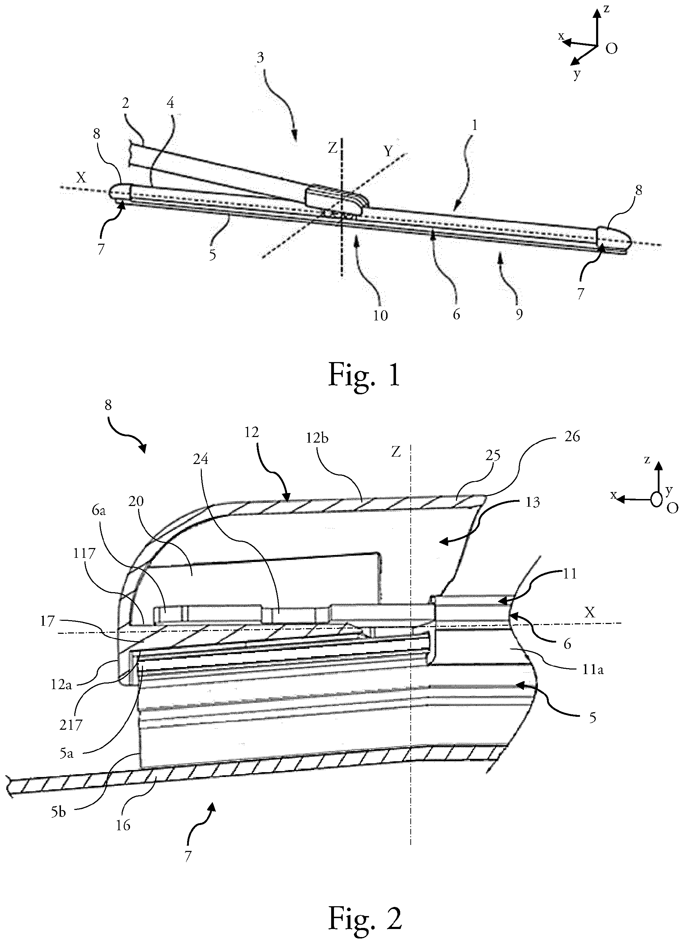

Sur les figures, les dénominations longitudinale, transversale, verticale, latérale, gauche, droite, supérieure, inférieure, se réfèrent à l'orientation, dans un repère orthonormé Oxyz, d'un balai d'essuyage 1 illustré sur la figure 1. Dans ce repère, l'axe Ox représente la direction longitudinale, l'axe Oy représente la direction transversale, et l'axe Oz représente la direction verticale de l'objet considéré, notamment l'embout d'extrémité ou le balai d'essuyage. Dans ce repère, un plan longitudinal vertical est parallèle au plan Oxz, un plan transversal vertical est parallèle au plan Oyz et un plan longitudinal horizontal est parallèle à un plan Oxy.

Sur la figure 1, un balai d'essuyage 1 de la présente invention s'étend selon un axe longitudinal X, parallèle à l'axe Ox. Les dénominations gauche et droite s'apprécient par rapport à une position le long d'un axe transversal Y, parallèle à l'axe Oy, de part et d'autre de l'axe longitudinal X. Un axe vertical Z symbolise une direction verticale, parallèle à celle de l'axe Oz, qui est perpendiculaire aux directions longitudinale et transversale décrites ci-dessus. Les dénominations supérieure ou inférieure se rapportent à des orientations le long de l'axe vertical Z, la dénomination inférieure contenant le plan de la surface vitrée.

Pour la direction longitudinale, les dénominations extérieure ou intérieure s'apprécient par rapport à un point de pivotement du balai d'essuyage sur son bras d'entraînement, la dénomination intérieure correspondant à la partie où le bras d'entraînement et un demi-balai s'étendent, la dénomination extérieure correspondant à la partie où l'autre demi-balai s'étend.

Un véhicule automobile est couramment équipé d'un système d'essuyage 3 pour évacuer une eau et/ou des salissures présentes sur la surface vitrée, notamment une lunette arrière ou un pare-brise avant de véhicule automobile. Tel qu'illustré sur la figure 1, le système d'essuyage 3 comprend un bras d'entraînement 2 qui est apte à effectuer un mouvement de va-et-vient angulaire le long et au-dessus de la surface vitrée.

Le système d'essuyage 3 comprend aussi le balai d'essuyage 1 qui s'étend selon l'axe longitudinal X. Le balai d'essuyage 1 comprend une lame d'essuyage 5 qui s'étend également selon cet axe longitudinal X et au moins un déflecteur d'air 4. Le déflecteur d'air 4 est prévu pour transformer une pression appliquée par un flux d'air circulant le long de la surface vitrée en une force d'appui du balai d'essuyage 1 contre la surface vitrée du véhicule automobile.

La lame d'essuyage 5 est la pièce du balai d'essuyage 1 en contact direct avec la surface vitrée pour évacuer l'eau et/ou les salissures présentes sur cette dernière. La lame d'essuyage 5 est par exemple une lame souple réalisée en un matériau élastique, tel qu'un polymère ou un caoutchouc, notamment.

Le balai d'essuyage 1 comprend aussi un élément de structure 6 qui confère au balai d'essuyage 1 une certaine déformation dans le plan Oxz, de manière à répartir la force d'appui du bras d'entraînement 2 le long du balai d'essuyage 1. Cette déformation permet également au balai d'essuyage 1 de s'adapter au galbe de la surface vitrée.

L'élément de structure 6 peut par exemple être une bande métallique, autrement appelée vertèbre, qui s'étend selon l'axe longitudinal X. Une telle vertèbre peut être unique mais l'élément de structure 6 peut également comprendre deux de ces vertèbres, alors disposées l'une à côté de l'autre dans le plan Oxy. Cette élément de structure 6 peut également comprendre un support dans lequel est logé une bande métallique, ce support permettant également de retenir la lame d'essuyage 5.

Le balai d'essuyage 1 comprend également à chacune de ses extrémités longitudinales 7 un embout d'extrémité 8. Chaque embout d'extrémité 8 est prévu pour maintenir ensemble la lame d'essuyage 5 et l'élément de structure 6. Ces embouts d'extrémité 8 ont également une fonction de protection et une fonction esthétique et ils peuvent par exemple également couvrir une partie terminale du déflecteur d'air 4. L'élément de structure 6 s'étend donc d'une première extrémité longitudinale 7 du balai d'essuyage 1 à une deuxième extrémité longitudinale 7 du même balai d'essuyage 1, entre deux embouts d'extrémités 8.

Le déflecteur d'air 4, la lame d'essuyage 5 et l'élément de structure 6 forment une structure semi-rigide 9 qui est portée par un dispositif de connexion 10, interposé entre une partie terminale du bras d'entraînement 2 et la structure semi-rigide 9. Un tel dispositif de connexion 10 comprend par exemple un connecteur solidaire au moins de manière isostatique de la structure semi-rigide 9, et un adaptateur relié par une liaison pivot au connecteur.

Tel qu'illustré sur la figure 1, le balai d'essuyage 1 comprend un embout d'extrémité 8 à chacune de ses extrémités longitudinales 7. Il est entendu qu'au moins l'un de ces deux embouts d'extrémité 8 est réalisé selon un aspect de la présente invention.

Un but de la présente invention est d'assurer un contact entre une extrémité longitudinale de la lame d'essuyage 5 la plus éloignée d'un point de rotation du bras d'entrainement 2 sur le véhicule automobile et la surface vitrée, et plus particulièrement une zone latérale de cette surface vitrée. L'embout d'extrémité 8 selon la présente invention peut ainsi être disposé à une seule des deux extrémités longitudinales 7 du balai d'essuyage 1, en l'espèce l'extrémité longitudinale 7 extérieure. On comprend toutefois que ce balai d'essuyage 1 peut comprendre deux embouts d'extrémités 8 selon la présente invention, respectivement disposés à chacune des deux extrémités longitudinales 7 du balai d'essuyage 1, sans sortir du domaine de la présente invention.

La figure 2 est une vue en perspective de l'une des extrémités longitudinales 7 du balai d'essuyage 3. Cette extrémité longitudinale 7 est couverte par un embout d'extrémité 8 selon la présente invention. Sur cette figure 2, l'embout d'extrémité 8 est représenté en coupe, cette coupe étant réalisée selon un plan longitudinal vertical parallèle au plan Oxz du repère orthonormé afin de rendre visible l'extrémité longitudinale 7 du balai d'essuyage 1 en question.

Selon un exemple illustré sur cette figure, l'élément de structure 6 peut comprendre un support 11, dans lequel est ménagé un canal longitudinal, une bande métallique unique 6a étant enfilée dans ce canal longitudinal. Dans un tel cas, le support 11 peut comprendre deux crochets 11a - un seul étant représenté sur cette figure 2 - qui retiennent la lame d'essuyage 5 par son talon 5a, le support 11 assurant alors un lien mécanique entre la lame d'essuyage 5 et la bande métallique unique 6a.

Comme cela est visible sur la figure 2, la bande métallique 6a comprend une encoche 24 configurée pour coopérer avec un moyen d'accrochage de l'embout d'extrémité 8.

L'embout d'extrémité 8 s'étend principalement selon l'axe longitudinal X et comprend une paroi périphérique 12 qui délimite un volume interne 13 de cet embout d'extrémité 8. Autrement dit, cette paroi périphérique 12 est une frontière entre le volume interne 13 de l'embout d'extrémité 8 et un environnement extérieur de cet embout d'extrémité 8.

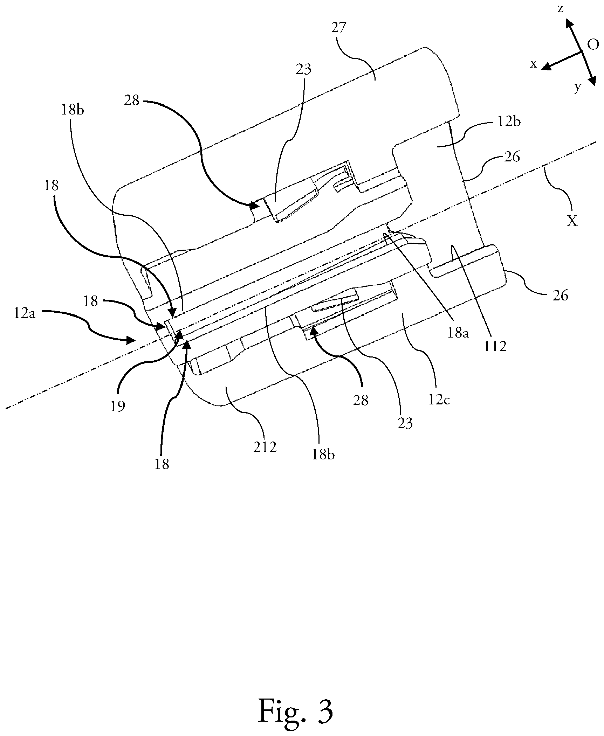

Cette paroi périphérique 12 comprend de préférence une paroi de fond 12a, une paroi supérieure 12b et une paroi inférieure, la paroi supérieure 12b et la paroi inférieure étant avantageusement reliées entre elles par la paroi de fond 12a. La paroi inférieure sera plus amplement décrite dans la suite de la description, en référence à la figure 3.

La paroi supérieure 12b et la paroi inférieure se rejoignent également au niveau de portions latérales de la paroi périphérique 12, tel que cela sera décrit ci-après, en référence à la figure 3. La paroi de fond 12a est de préférence continue et régulière entre la paroi supérieure 12b et la paroi inférieure.

La paroi supérieure 12b et la paroi inférieure sont de préférence respectivement délimitées, longitudinalement, d'une part par la paroi de fond 12a et d'autre part par une tranche d'extrémité longitudinale 26. La tranche d'extrémité longitudinale 26 de la paroi supérieure 12b et la tranche d'extrémité longitudinale de la paroi inférieure se rejoignent et délimitent, ensemble, un orifice par lequel l'embout d'extrémité 8 peut être enfilé sur l'extrémité longitudinale 7 du balai d'essuyage 1.

L'embout d'extrémité 8 selon la présente invention comprend un premier logement configuré pour recevoir la lame d'essuyage 5 du balai d'essuyage et un deuxième logement configuré pour recevoir la bande métallique 6a.

Le premier logement est de préférence délimité longitudinalement par la paroi de fond 12a de la paroi périphérique 12 et par une bouche d'entrée configurée pour permettre l'introduction du talon 5a de la lame d'essuyage 5. Ce premier logement est de préférence délimité verticalement, c'est-à-dire le long d'une direction verticale Z, par la paroi inférieure de la paroi périphérique 12 et par une paroi longitudinale 17 émergeant de la paroi de fond 12a de la paroi périphérique 12.

Tel qu'illustré sur la figure 2, la paroi longitudinale 17 émerge de préférence de la paroi de fond 12a de la paroi périphérique 12 et s'étend longitudinalement dans le volume interne 13 de l'embout d'extrémité 8, par exemple entre le premier logement et le deuxième logement.

Tel que cela sera plus amplement décrit dans la suite de la description, le premier logement traverse la paroi périphérique 12 par une fente, et plus précisément le premier logement traverse la paroi inférieure de la paroi périphérique 12 au moyen de cette fente.

Ce premier logement est configuré pour recevoir le talon 5a de la lame d'essuyage 5, et plus exactement une extrémité longitudinale du talon 5a de cette lame d'essuyage 5. La lame d'essuyage 5 comprend également une lèvre 5b émergeant du talon 5a et s'étend à travers la fente par laquelle le premier logement débouche dans la paroi périphérique 12.

Tel qu'illustré, cette lèvre 5b est destinée à venir au contact de la surface vitré 16 afin d'en essuyer les salissures et/ou l'eau tel que précédemment mentionné.

Le deuxième logement est quant à lui par exemple délimité au moins par la paroi de fond 12a de la paroi périphérique 12, par au moins un montant 20 émergeant de la paroi supérieure 12b de la paroi périphérique 12 et s'étendant selon la direction verticale Z, et par la paroi longitudinale 17 émergeant de la paroi de fond 12a de cette paroi périphérique 12 et délimitant également le premier logement.

Selon un exemple de réalisation non illustré ici, le deuxième logement peut être périphériquement et entièrement délimité par des parois internes de l'embout d'extrémité, c'est-à-dire des parois s'étendant dans le volume interne de cet embout d'extrémité.

Ce deuxième logement est configuré pour recevoir une extrémité de l'élément de structure 6. Selon l'exemple illustré sur la figure 2, ce deuxième logement reçoit ainsi une extrémité de la bande métallique 6a formant un exemple de l'élément de structure 6.

La paroi longitudinale 17 comprend une première face 117 tournée vers le deuxième logement et une deuxième face 217 tournée vers le premier logement. Tel que cela est visible sur la figure 2, la première face 117 de la paroi longitudinale 17 est disposée au contact de la bande métallique 6a et la deuxième face 217 de cette paroi longitudinale 17 est quant à elle tournée vers le talon 5a de la lame d'essuyage 5, et peut venir au contact de ce talon 5a.

Comme on peut le voir sur la figure 2, l'embout d'extrémité 8 selon la présente invention est configuré pour générer une inclinaison de la lame d'essuyage 5, et plus précisément, pour générer une inclinaison de l'extrémité longitudinale de la lame d'essuyage 5 reçue dans le premier logement 14 de cet embout d'extrémité 8, par rapport au reste de la lame d'essuyage 5.

On entend par « inclinaison », une inclinaison dans un plan longitudinal vertical parallèle au plan Oxz.

Grâce à cette inclinaison, l'extrémité longitudinale de la lame d'essuyage 5 s'adapte au galbe de la surface vitrée 16 et l'extrémité longitudinale de la lame d'essuyage 5 est ainsi au contact de cette surface vitrée 16 dans la zone latérale de cette surface vitrée où le galbe est plus prononcé.

Tel que partiellement illustré sur la figure 2, la paroi périphérique 12 peut comprendre une conformation 25 agencée pour recevoir la partie terminale du déflecteur d'air du balai d'essuyage. Plus précisément, cette conformation 25 est ménagée par la paroi supérieure 12b de cette paroi périphérique 12.

La figure 3 est une vue en perspective de dessous de l'embout d'extrémité 8 selon la présente invention. Sur cette figure sont notamment visibles la paroi inférieure 12c de la paroi périphérique 12, ainsi que les portions latérales 27 de cette paroi périphérique 12 au niveau desquelles se rejoignent la paroi inférieure 12c et la paroi supérieure 12b précédemment mentionnées.

Tel qu'illustré sur cette figure 3, la paroi inférieure 12c de la paroi périphérique 12 est ajourée. Cette paroi inférieure 12c comprend notamment la fente 19 par laquelle le premier logement débouche dans la paroi périphérique 12. Cette fente 19 est ménagée longitudinalement depuis l'orifice par lequel l'embout d'extrémité est enfilé sur le balai d'essuyage et de préférence vers la paroi de fond 12a de la paroi périphérique 12.

Cette fente 19 est délimitée par au moins trois bords 18. Ces bords 18 sont agencés en forme de « U » afin de permettre l'introduction de la lame d'essuyage dans le premier logement. Chacun de ces bords 18 comprend au moins une première arête 18a tournée vers le premier logement et une deuxième arête 18b tournée vers l'environnement extérieur de l'embout d'extrémité 8, c'est-à-dire dans une direction opposée au volume interne 13 de cet embout d'extrémité 8.

La paroi inférieure 12a de la paroi périphérique 12 comprend une première face 112 tournée vers le volume interne 13, et donc vers le premier logement qu'elle délimite en partie, et une deuxième face 212 tournée l'environnement extérieur de l'embout d'extrémité 8.

Deux ajours 28 sont également ménagés dans la paroi inférieure 12c, de part et d'autre de la fente 19. Chacun de ces ajours 28 laisse apparaître un moyen d'accrochage 23 destiné à coopérer avec l'encoche ménagée sur la bande métallique tel que précédemment décrit.

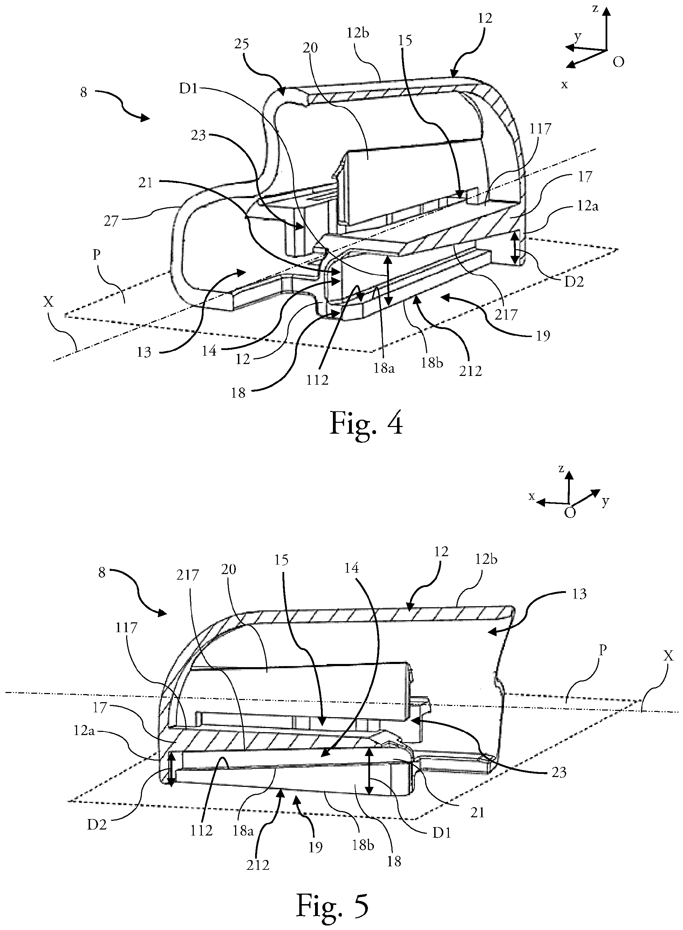

Nous allons maintenant décrire plus en détails l'embout d'extrémité 8 selon un aspect de la présente invention permettant d'obtenir l'inclinaison de l'extrémité longitudinale de la lame d'essuyage 5 reçue dans cet embout d'extrémité 8. Cet embout d'extrémité 8 peut être réalisé selon différents exemples de réalisation, chacun de ces exemples de réalisation étant décrit ci-après, en référence aux figures 4 à 6. Ces figures 4 à 6 sont respectivement des vues en perspective d'une coupe longitudinale verticale, en d'autres termes une coupe selon un plan parallèle au plan Oxz, d'un embout d'extrémité 8 selon un premier exemple de réalisation, selon un deuxième exemple de réalisation et selon un troisième exemple de réalisation de la présente invention.

Tel que représenté sur les figures 4 à 6, les deuxièmes arêtes 18b des bords 18 de la fente 19 s'inscrivent dans un premier plan P longitudinal horizontal, parallèle au plan Oxy.

Les figures 4 à 6 rendent en partie visible les bords 18 délimitant la fente 19 par laquelle le premier logement 14 débouche dans la paroi périphérique 12. Tel que précédemment décrit, ces bords 18 présentent chacun la première arête 18a tournée vers le volume interne 13 de l'embout d'extrémité 8 et la deuxième arête 18b tournée vers l'environnement extérieur de l'embout d'extrémité 8. Cette fente 19 est de préférence délimitée, longitudinalement, par la paroi de fond 12a de la paroi périphérique 12 d'une part, et par la bouche d'entrée 21 de ce premier logement 14 d'autre part. Pour rappel, cette bouche d'entrée 21 du premier logement 14 est configurée pour permettre l'introduction de la lame d'essuyage dans ce premier logement 14.

Tel qu'illustré, les deuxièmes arêtes 18b des bords 18 s'inscrivent dans le premier plan P longitudinal horizontal, parallèle au plan Oxy du repère orthonormé.

Tel que précédemment décrit, la paroi inférieure 12c de la paroi périphérique 12 dans laquelle est ménagée la fente 19 comprend la première face 112 tournée vers le premier logement 14 et la deuxième face 212, tournée vers l'environnement extérieur de l'embout d'extrémité 8. Cette deuxième face 212 s'inscrit dans le premier plan P dans lequel s'inscrivent les bords 18 de la fente 19, et plus précisément les deuxièmes arêtes 18b de ces bords 18.

D'après ce qui précède, le premier logement 14 est donc délimité verticalement, c'est-à-dire le long d'une direction parallèle à l'axe Oz du repère orthonormé, par la première face 112 de la paroi inférieure 12c de la paroi périphérique 12 et par la deuxième face 217 de la paroi longitudinale 17. Le deuxième logement 15 est quant à lui par exemple délimité verticalement par la première face 117 de la paroi longitudinale 17 et par le ou les montants 20 précédemment décrits.

L'embout d'extrémité 8 selon un aspect de la présente invention peut également comprendre un ou plusieurs moyens d'accrochage 23 configurés pour maintenir l'embout d'extrémité 8 sur l'élément de structure dans cet embout d'extrémité 8, tel que précédemment décrit, en référence aux figures 2 et 3.

Selon un aspect de la présente invention, l'embout d'extrémité 8 présente une première distance D1 mesurée au droit de la bouche d'entrée 21 du premier logement 14, entre le premier plan P dans lequel s'inscrivent les bords 18 de la fente 19 et la deuxième face 217 de la paroi longitudinale 17, et une deuxième distance D2, distincte de la première distance D1 et mesurée parallèlement à cette première distance D1, entre le premier plan P et la deuxième face 217 de la paroi longitudinale 17, cette première distance D1 étant supérieure à cette deuxième distance D2.

On comprend donc que cette première distance D1 et cette deuxième distance D2 sont mesurées le long de deux droites parallèles entre elles et également parallèles à l'axe Ox du repère orthonormé. En d'autres termes, cette première distance D1 et cette deuxième distance D2 sont mesurées le long de deux droites respectivement perpendiculaires au premier plan P et distinctes l'une de l'autre. Avantageusement, la deuxième distance D2 est mesurée au plus près de la paroi de fond 12a de la paroi périphérique 12 délimitant le premier logement 14.

On entend par « mesurée au droit de la bouche d'entrée », une mesure prise selon une droite passant par un plan dans lequel s'inscrit cette bouche d'entrée 21. La première distance D1 est ainsi mesurée selon une droite perpendiculaire au premier plan P et s'inscrivant dans le plan dans lequel s'inscrit la bouche d'entrée 21.

Selon la présente invention et tel qu'on peut le voir sur les figures 4 à 6, la première distance D1 est supérieure à la deuxième distance D2. C'est notamment cette différence entre la première distance D1 et la deuxième distance D2 qui permet de générer l'inclinaison de l'extrémité longitudinale de la lame d'essuyage reçue dans le premier logement 14 précédemment décrite. Les différents exemples de réalisation décrits ci-dessous permettent ainsi tous d'obtenir cette différence de distances, grâce à trois exemples d'agencements différents de l'embout d'extrémité 8.

Selon le premier exemple de réalisation illustré sur la figure 4, la première face 117 de la paroi longitudinale 17 et les premières arêtes 18a des bords 18 de la fente 19 s'étendent respectivement dans un deuxième plan et dans un troisième plan. Ce deuxième plan et ce troisième plan sont parallèles entre eux et s'étendent parallèlement au premier plan P dans lequel s'inscrivent les deuxièmes arêtes 18b des bords 18 de la fente 19.

Selon ce premier exemple de réalisation, la deuxième face 217 de la paroi longitudinale 17 s'étend dans un quatrième plan, ce quatrième plan étant sécant du premier plan, du deuxième plan et du troisième plan mentionnés ci-dessus. Autrement dit, la première face 117 et la deuxième face 217 de la paroi longitudinale 17 ne sont pas parallèles.

Selon cet exemple de réalisation de la présente invention, la paroi longitudinale 17, et plus précisément la deuxième face 217 de cette paroi longitudinale 17 forme, avec le premier plan P dans lequel s'inscrivent les deuxièmes arêtes 18b des bords 18 de la fente 19, un angle compris entre 3° et 6°. Avantageusement, cet angle est compris entre 4° et 6°. Encore plus avantageusement, cet angle est égal ou sensiblement égale à 4,1°, une telle valeur étant adaptée à une grande variété de surface vitrées.

On comprend alors que selon ce premier exemple de réalisation, une section transversale du premier logement 14 se réduit en se déplaçant le long de l'axe longitudinal X. On entend par « section transversale » une section réalisée selon un plan parallèle au plan Oyz du repère orthonormé.

Avantageusement, en d'autres termes, la section transversale du premier logement 14 au niveau de la bouche d'entrée 21 est supérieure à la section transversale de ce premier logement 14 au niveau de la paroi de fond 12a. Selon ce premier exemple de réalisation, cette différence de section transversale, liée à la différence entre la première distance D1 et la deuxième distance D2, permet notamment de générer l'inclinaison de l'extrémité longitudinale de la lame d'essuyage reçue dans le premier logement 14.

L'embout d'extrémité 8 réalisé selon le deuxième exemple de réalisation illustré sur la figure 5 diffère de l'embout d'extrémité 8 réalisé selon le premier exemple de réalisation en ce que le troisième plan dans lequel s'inscrivent les premières arêtes 18a des bords 18 de la fente 19 est parallèle au quatrième plan dans lequel s'inscrit la deuxième face 217 de la paroi longitudinale 17.

Ainsi, selon ce deuxième exemple de réalisation, le premier plan P est parallèle au deuxième plan dans lequel s'inscrit la première face 117 de la paroi longitudinale 17, le troisième plan dans lequel s'inscrivent les premières arêtes 18a des bords 18 de la fente 19 est parallèle au quatrième plan dans lequel s'inscrit la deuxième face 217 de la paroi longitudinale 17, ce premier plan P et ce deuxième plan étant tous deux sécants du troisième plan et du quatrième plan.

On comprend donc que selon ce deuxième exemple de réalisation, la section transversale du premier logement 14 est avantageusement constante de la bouche d'entrée 21 à la paroi de fond 12a, puisque la première face 112 de la paroi périphérique 12 et la deuxième face 217 de la paroi longitudinale 17 délimitant le premier logement 14 sont parallèles entre elles. Selon ce deuxième exemple de réalisation, c'est par exemple l'inclinaison de la deuxième face 217 de la paroi longitudinale 17, en combinaison avec l'inclinaison des premières arêtes 18a des bords 18 de la fente 19, qui permet de générer l'inclinaison de l'extrémité de la lame d'essuyage reçue dans le premier logement 14. Tel que précédemment mentionné, on entend par « inclinaison » une inclinaison dans un plan longitudinal vertical parallèle au plan Oxz.

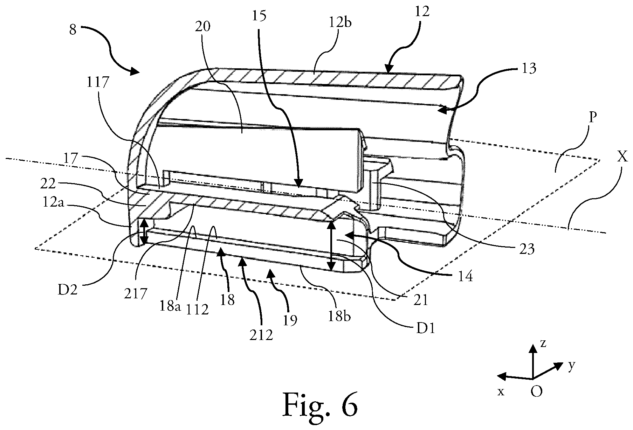

Selon le quatrième exemple de réalisation illustré sur la figure 6, la paroi longitudinale 17 comprend une excroissance 22 qui est issue de la deuxième face 217 de cette paroi longitudinale 17 et qui s'étend dans le premier logement 14. Tel qu'illustré, cette excroissance 22 est issue de matière avec la paroi longitudinale 17 qui la porte. Selon ce quatrième exemple de réalisation, l'excroissance 22 prend de préférence appui sur la paroi de fond 12a de la paroi périphérique 12 délimitant le premier logement.

Selon ce quatrième exemple de réalisation, la deuxième distance D2 est mesurée au droit de cette excroissance 22. Avantageusement cette deuxième distance D2 est mesurée en un point de cette excroissance 22 le plus proche de la fente 19, c'est-à-dire le plus proche de la paroi inférieure 12c de la paroi périphérique 12.

On comprend ainsi que selon ce quatrième exemple de réalisation, la section transversale du premier logement 14 est réduite au niveau de cette excroissance 22, ce qui permet de générer l'inclinaison de l'extrémité de la lame d'essuyage reçue dans le premier logement 14. Cette section transversale du premier logement 14 peut en revanche être constante le long de ce premier logement 14, en dehors de l'excroissance 22.

L'excroissance 22 peut prendre plusieurs configurations différentes. Par exemple il peut s'agir d'un épaulement franc de la paroi longitudinale 17. Cette excroissance 22 peut également prendre la forme d'un dôme ou encore d'une goutte. Toute autre forme permettant de générer l'inclinaison de la lame d'essuyage est également envisageable, sans sortir du domaine de l'invention.

Selon ce quatrième exemple de réalisation, le quatrième plan dans lequel s'inscrit la deuxième face 217 de la paroi longitudinale 17 est parallèle à la fois au premier plan P dans lequel s'inscrivent les deuxièmes arêtes 18b des bords 18 de la fente 19, au troisième plan dans lequel s'inscrivent les premières arêtes 18a des bords 18 de la fente 19 et au deuxième plan dans lequel s'étend la première face 117 de la paroi longitudinale 17.

Selon une variante de ce quatrième exemple de réalisation, le quatrième plan dans lequel s'inscrit la deuxième face de la paroi longitudinale est parallèle au troisième plan dans lequel s'inscrivent les premières arêtes des bords de la fente et il est sécant du premier plan dans lequel s'inscrivent les deuxièmes arêtes des bords de la fente.

Selon d'autres variantes de ce quatrième exemple, l'excroissance portée par la paroi longitudinale peut être disposée en n'importe quel point de cette paroi longitudinale le long de l'axe longitudinal X, à l'exception de la bouche d'entrée 21. En d'autres termes, selon ces variantes de réalisation, l'excroissance est issue de matière uniquement avec la paroi longitudinale, notamment sans contact avec la paroi de fond de la paroi périphérique.

La présente invention propose ainsi un embout d'extrémité permettant de générer une inclinaison d'une extrémité longitudinale d'une lame d'essuyage afin que celle-ci puisse s'adapter au galbe d'une surface vitrée pour être en contact de manière efficace avec cette dernière. La présente invention permet ainsi d'assurer un balayage optimal de la surface vitrée afin d'en nettoyer toutes les salissures.

L'invention ne saurait toutefois se limiter aux moyens et configurations décrits et illustrés ici, et elle s'étend également à tous moyens ou configurations équivalents et à toute combinaison techniquement opérante de tels moyens. En particulier, la forme et les dimensions du premier logement peuvent être modifiées sans nuire à l'invention, dans la mesure où elles remplissent les fonctionnalités décrites dans le présent document.

## Revendications

1. Embout d'extrémité (8) configuré pour être installé à une extrémité longitudinale (7) d'un balai d'essuyage (1), l'embout d'extrémité (8) comprenant un volume interne (13) et une paroi périphérique (12) qui délimite le volume interne (13), l'embout d'extrémité (8) comprenant au moins un premier logement (14) configuré pour recevoir un talon (5a) d'une lame d'essuyage (5) et en communication avec une fente (19) qui traverse la paroi périphérique (12), la fente (19) étant délimitée par des bords (18), le premier logement (14) s'étendant longitudinalement depuis une bouche d'entrée (21) par laquelle le talon (5a) de la lame d'essuyage (5) peut être introduit dans le premier logement (14), et s'étendant de préférence jusqu'à une paroi de fond (12a) de la paroi périphérique (12), le premier logement (14) étant délimité par une paroi longitudinale (17) disposée dans le volume interne (13), **caractérisé en ce qu'**une première distance D1 mesurée au droit de la bouche d'entrée (21) entre l'un des bords (18) délimitant la fente (19) et la paroi longitudinale (17) est supérieure à une deuxième distance D2 distincte de la première distance D1 et mesurée parallèlement à la première distance D1, la deuxième distance D2 étant mesurée entre l'un des bords (18) de la fente (19) et la paroi longitudinale (17).

2. Embout d'extrémité (8) selon la revendication précédente, comprenant un deuxième logement (15) configuré pour recevoir un élément de structure (6) du balai d'essuyage (1), le deuxième logement (15) étant délimité au moins par la paroi longitudinale (17).

3. Embout d'extrémité (8) selon l'une quelconque des revendications précédentes, dans lequel la paroi longitudinale (17) forme, avec un plan (P) dans lequel s'inscrivent les bords (18) de la fente (19), un angle compris entre 3° et 6°.

4. Embout d'extrémité (8) selon l'une quelconque des revendications 1 ou 2, dans lequel la paroi périphérique (12) comprend une première face (112) tournée vers le premier logement (14), dans lequel la paroi longitudinale (17) comprend une face (217) tournée vers le premier logement (14), la première face (112) de la paroi périphérique (12) s'étendant dans un premier plan, la face (217) de la paroi longitudinale (17) s'étendant dans un deuxième plan, le premier plan et le deuxième plan étant parallèles.

5. Embout d'extrémité (8) selon la revendication précédente, dans lequel le premier plan dans lequel s'inscrit la première face (112) de la paroi périphérique (12) et le deuxième plan dans lequel s'inscrit la face (217) de la paroi longitudinale (17) sont sécants avec un plan (P) dans lequel s'inscrivent les bords (18) de la fente (19) du premier logement (14).

6. Embout d'extrémité (8) selon l'une quelconque des revendications 1, 2 ou 4 ou 5, dans lequel la paroi longitudinale (17) porte une excroissance (22) émergeant dans le premier logement (14) de l'embout d'extrémité (8), la deuxième distance D2 étant mesurée au droit de cette excroissance (22).

7. Embout d'extrémité (8) selon la revendication précédente, dans lequel le premier logement (14) est délimité longitudinalement par une paroi de fond (12a) de la paroi périphérique (12) et dans lequel l'excroissance (22) prend appui sur cette paroi de fond (12a).

8. Embout d'extrémité (8) selon l'une quelconque des revendications précédentes, dans lequel la paroi périphérique (12) délimitant l'embout d'extrémité (8) comprend une conformation (25) agencée pour couvrir une extrémité terminale d'un déflecteur d'air (4).

9. Balai d'essuyage (1) comprenant au moins une lame d'essuyage (5), au moins un élément de structure (6), et au moins un embout d'extrémité (8) selon l'une quelconque des revendications précédentes.

10. Système d'essuyage (3) comprenant un balai d'essuyage (1) selon la revendication précédente, ce balai d'essuyage (1) étant connecté à un bras d'entrainement (2) par un dispositif de connexion (10).

## Patentansprüche

1. Endstück (8), das zur Installation an einem Längsende (7) eines Scheibenwischerblatts (1) konfiguriert ist, wobei das Endstück (8) ein Innenvolumen (13) und eine Umfangswand (12), die das Innenvolumen (13) begrenzt, umfasst, wobei das Endstück (8) mindestens eine erste Aufnahme (14), die zur Aufnahme eines hinteren Teils (5a) einer Wischleiste (5) konfiguriert ist und mit einem Schlitz (19), der durch die Umfangswand (12) hindurchgeht, in Verbindung steht, umfasst, wobei der Schlitz (19) durch Ränder (18) begrenzt wird, wobei sich die erste Aufnahme (14) in Längsrichtung bis zu einer Eintrittsmündung (21), durch die der hintere Teil (5a) der Wischleiste (5) in die erste Aufnahme (14) eingeführt werden kann, erstreckt und sich vorzugsweise bis zu einer Bodenwand (12a) der Umfangswand (12) erstreckt, wobei die erste Aufnahme (14) durch eine Längswand (17), die in dem Innenvolumen (13) angeordnet ist, begrenzt wird, **dadurch gekennzeichnet, dass** ein erster Abstand D1, der rechts von der Eintrittsmündung (21) zwischen einem der Ränder (18), die den Schlitz (19) begrenzen, und der Längswand (17) gemessen wird, größer als ein zweiter Abstand D2, der sich von dem ersten Abstand D1 unterscheidet und parallel zum ersten Abstand D1 gemessen wird, ist, wobei der zweite Abstand D2 zwischen einem der Ränder (18) des Schlitzes (19) und der Längswand (17) gemessen wird.

2. Endstück (8) nach dem vorhergehenden Anspruch, das eine zweite Aufnahme (15) umfasst, die zur Aufnahme eines Strukturelements (6) des Scheibenwischerblatts (1) konfiguriert ist, wobei die zweite Aufnahme (15) mindestens durch die Längswand (17) begrenzt wird.

3. Endstück (8) nach einem der vorhergehenden Ansprüche, wobei die Längswand (17) mit einer Ebene (P), in die die Ränder (18) des Schlitzes (19) einbeschrieben werden, einen Winkel zwischen 3° und 6° bildet.

4. Endstück (8) nach einem der Ansprüche 1 oder 2, wobei die Umfangswand (12) eine erste Seite (112), die zu der ersten Aufnahme (14) gewandt ist, umfasst, wobei die Längswand (17) eine Seite (217), die zu der ersten Aufnahme (14) gewandt ist, umfasst, wobei sich die erste Seite (112) der Umfangswand (12) in einer ersten Ebene erstreckt, wobei sich die Seite (217) der Längswand (17) in einer zweiten Ebene erstreckt, wobei die erste Ebene und die zweite Ebene parallel sind.

5. Endstück (8) nach dem vorhergehenden Anspruch, wobei die erste Ebene, in die die erste Seite (112) der Umfangswand (12) einbeschrieben wird, und die zweite Ebene, in die die Seite (217) der Längswand (17) einbeschrieben wird, eine Ebene (P), in die die Ränder (18) des Schlitzes (19) der ersten Aufnahme (14) einbeschrieben werden, schneiden.

6. Endstück (8) nach einem der Ansprüche 1, 2 oder 4 oder 5, wobei die Längswand (17) einen Vorsprung (22) aufweist, der in die erste Aufnahme (14) des Endstücks (8) vorragt, wobei der zweite Abstand D2 rechts von diesem Vorsprung (22) gemessen wird.

7. Endstück (8) nach dem vorhergehenden Anspruch, wobei die erste Aufnahme (14) in der Längsrichtung von einer Bodenwand (12a) der Umfangswand (12) beschränkt wird und wobei der Vorsprung (22) an dieser Bodenwand (12a) anliegt.

8. Endstück (8) nach einem der vorhergehenden Ansprüche, wobei die Umfangswand (12), die das Endstück (8) begrenzt, eine Ausformung (25) umfasst, die dahingehend angeordnet ist, ein äußeres Ende eines Luftleitblechs (4) zu bedecken.

9. Scheibenwischerblatt (1), das mindestens eine Wischleiste (5), mindestens ein Strukturelement (6) und mindestens ein Endstück (8) nach einem der vorhergehenden Ansprüche umfasst.

10. Scheibenwischanlage (3), die ein Scheibenwischerblatt (1) nach dem vorhergehenden Anspruch umfasst, wobei das Scheibenwischerblatt (1) über eine Verbindungsvorrichtung (10) mit einem Antriebsarm (2) verbunden ist.

## Claims

1. End piece (8) configured for installation at a longitudinal extremity (7) of a windscreen wiper (1), the end piece (8) comprising an internal volume (13) and a peripheral wall (12) which delimits the internal volume (13), the end piece (8) comprising at least one first housing (14) configured to accommodate a heel (5a) of a wiper blade (5) and being in communication with a slot (19) which passes through the peripheral wall (12), the slot (19) being delimited by sides (18), the first housing (14) extending longitudinally from an inlet (21), through which the heel (5a) of the wiper blade (5) may be introduced into the first housing (14), and extending preferably as far as a bottom wall (12a) of the peripheral wall (12), the first housing (14) being delimited by a longitudinal wall (17) disposed in the internal volume (13), **characterized in that** a first distance D1 measured at the inlet (21) between one of the sides (18) delimiting the slot (19) and the longitudinal wall (17) is greater than a second distance D2 separate from the first distance D1 and measured parallel to the first distance D1, the second distance D2 being measured between one of the sides (18) of the slot (19) and the longitudinal wall (17).

2. End piece (8) according to the preceding Claim, comprising a second housing (15) configured to accommodate a structural element (6) of the windscreen wiper (1), the second housing (15) being delimited at least by the longitudinal wall (17).

3. End piece (8) according to any one of the preceding Claims, in which the longitudinal wall (17) forms, together with a plane (P) containing the sides (18) of the slot (19), an angle of between 3° and 6°.

4. End piece (8) according to any one of Claims 1 or 2, in which the peripheral wall (12) comprises a first face (112) oriented towards the first housing (14), in which the longitudinal wall (17) comprises a face (217) oriented towards the first housing (14), the first face (112) of the peripheral wall (12) extending in a first plane, the face (217) of the longitudinal wall (17) extending in a second plane, the first plane and the second plane being parallel.

5. End piece (8) according to the preceding Claim, in which the first plane containing the first face (112) of the peripheral wall (12) and the second plane containing the face (217) of the longitudinal wall (17) are secant with a plane (P) containing the sides (18) of the slot (19) of the first housing (14).

6. End piece (8) according to any one of Claims 1, 2 or 4 or 5, in which the longitudinal wall (17) supports a protrusion (22) emerging into the first housing (14) of the end piece (8), the second distance D2 being measured at said protrusion (22).

7. End piece (8) according to the preceding Claim, in which the first housing (14) is delimited longitudinally by a bottom wall (12a) of the peripheral wall (12), and in which the protrusion (22) is supported on said bottom wall (12a).

8. End piece (8) according to any one of the preceding Claims, in which the peripheral wall (12) delimiting the end piece (8) comprises a structure (25) arranged in order to cover a terminal extremity of an air deflector (4).

9. Windscreen wiper (1) comprising at least one wiper blade (5), at least one structural element (6), and at least one end piece (8) according to any one of the preceding Claims.

10. Wiper system (3) comprising a windscreen wiper (1) according to the preceding Claim, said windscreen wiper (1) being connected to a driving arm (2) by a connection device (10).
